# EUROPEAN PATENT APPLICATION

(11) **EP 3 279 406 A1**
(43) Date of publication of application: **07.02.2018**
(21) Application number: 15877372.1
(22) Date of filing: 30.03.2015
(51) Int. Cl.: E04F 15/10, B32B 37/02, B32B 37/14

(54) **FLAME-RETARDANT FLOOR MATERIAL AND METHOD FOR MANUFACTURING SAME**

(71) Applicant: LG Hausys, Ltd., Seoul 07336 (KR)
(72) Inventor: PARK, Sung Ha, Ulsan 44658 (KR); SUNG, Jae Wan, Ulsan 44658 (KR)
(74) Representative: Goddar, Heinz J.
(86) International application number: PCT/KR2015/003092
(87) International publication number: WO 2016/159400

(57) **Abstract**

Disclosed are a flame retardant flooring material in which a balance layer forming the main portion of the flooring material is formed of PVB so as to achieve cost reduction and to have flame retardancy, and a method of manufacturing the same. The flame retardant flooring material includes a plain weave layer, a PVB balance layer stacked on the upper surface of the plain weave layer, a dimension reinforcing layer stacked on the upper surface of the PVB balance layer using an adhesive, a printed layer stacked on the upper surface of the dimension reinforcing layer, and a transparent PVC layer stacked on the printed layer.

## Description

### [Technical Field]

The present invention relates to a flame retardant flooring material and a method of manufacturing the same, and more particularly to a flame retardant flooring material in which a balance layer forming the main portion of the flooring material is formed of PVB so as to achieve cost reduction and to have flame retardancy, and a method of manufacturing the same.

### [Background Art]

Recently, as quality of life improves, interest in environmentally friendly products as well as health is increasing.

For example, flooring materials closely related with residential life tend to employ materials which may provide environmentally-friendly properties.

Flooring materials formed of rubber have most excellent flame retardancy but are difficult to use due to high costs thereof.

Therefore, flooring materials formed of PVC, which have insufficient flame retardancy but are inexpensive, are widely used.

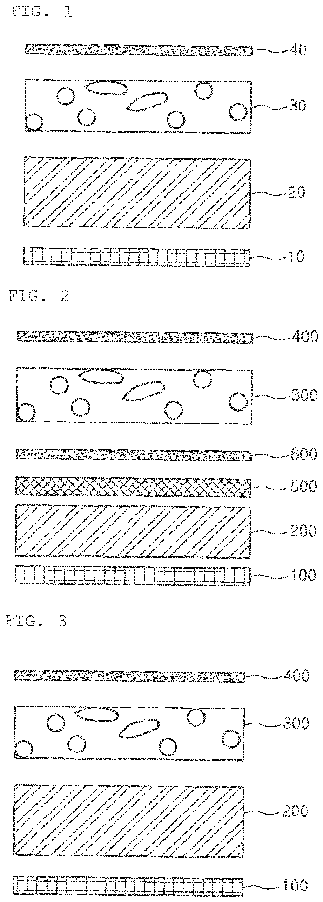

FIG. 1 is a cross-sectional view of a conventional general PVC flooring material.

As exemplarily shown in FIG. 1, the conventional PVC flooring material includes a plain weave layer 10, a balance layer 20, a transparent PVC layer 30 and a surface treatment layer 40 in the upward direction from below.

However, in the conventional PVC flooring material, the balance layer 20 forming the main portion of the flooring material is formed of PVC and, thus, in case of fire, a large amount of hydrogen chloride (HC1) gas is generated.

Particularly, if the PVC flooring material is used in ships, trains, vehicles, etc., in the event of fire, a smoke generation rate is increased, a toxicity problem due to gas causes secondary damage, such as suffocation, in case of fire or fire suppression, and, thus, compositions manufacturing flooring materials require non-toxicity and flame retardancy, such as low smoke generation, and are legally regulated and standardized.

Therefore, development of a new flame retardant flooring material is urgently required.

As examples of conventional PVC flooring materials, Korean Patent Laid-open Publication Nos. 10-2004-0065494 and 10-2010-0061944 are disclosed.

### [Disclosure]

### [Technical Problem]

Therefore, the present invention has been made in view of the above problems, and it is one object of the present invention to provide a flame retardant flooring material in which a balance layer forming the main portion of the flooring material is formed of Polyvinyl butyral (PVB) having flame retardancy so as to achieve cost reduction and to have flame retardancy, and a method of manufacturing the same.

### [Technical Solution]

In accordance with an aspect of the present invention, the above and other objects can be accomplished by the provision of a flame retardant flooring material including a plain weave layer, a PVB balance layer stacked on the upper surface of the plain weave layer, a dimension reinforcing layer stacked on the upper surface of the PVB balance layer using an adhesive, a printed layer stacked on the upper surface of the dimension reinforcing layer, and a transparent PVC layer stacked on the printed layer.

In accordance with another aspect of the present invention, there is provided a method of manufacturing a flame retardant flooring material including a first step of forming a plain weave layer by bonding a plain-woven fabric to the lower surface of a PVB balance layer, a second step of applying an adhesive to the upper surface of the PVB balance layer, a third step of forming a dimension reinforcing layer by impregnating fiber with polyvinyl chloride (PVC) sol and then gelling the fiber, a fourth step of forming a printed layer on the upper surface of the dimension reinforcing layer, a fifth step of forming a transparent PVC layer by bonding a transparent PVC film to the upper surface of the printing surface, a sixth step of bonding the lower surface of the dimension reinforcing layer to the upper surface of the PVB balance layer provided with the adhesive applied thereto, and a seventh step of forming a surface treatment layer by executing UV coating on the upper surface of the transparent PVC layer and then executing UV curing.

### [Advantageous effects]

As is apparent from the above description, a flame retardant flooring material and a method of manufacturing the same in accordance with the present invention have effects below.

A balance layer forming the main portion of the flooring material is formed of PVB having flame retardancy, thereby being capable of providing a flame retardant flooring material which may reduce a smoke density and emission amounts of hydrogen chloride gas and carbon monoxide in the event of fire.

Further, the flame retardant flooring material of the present invention may have lower costs than conventional flooring materials formed of rubber and more excellent flame retardancy than flooring materials formed of PVC.

In addition, a dimension reinforcing layer is stacked, thus being capable of reinforcing the overall dimensions of the flooring material.

Moreover, a printed layer is formed through transfer printing using printing paper, thus being capable of implementing various patterns.

### [Description of Drawings]

FIG. 1 is a cross-sectional view illustrating the configuration of a conventional general PVC flooring material.
FIG. 2 is a cross-sectional view illustrating the configuration of a flame retardant flooring material in accordance with one embodiment of the present invention.
FIG. 3 is a cross-sectional view illustrating the configuration of a flame retardant flooring material in accordance with another embodiment of the present invention.
FIG. 4 is a schematic diagram illustrating a process of manufacturing a flame retardant flooring material in accordance with one embodiment of the present invention.
FIG. 5 is a comparative table stating emission amounts of toxic gases from a flame retardant flooring material in accordance with the present invention and a conventional PVC flooring material.

### [Description of Reference Numerals]

100: plain weave layer 200: PVB balance layer 300: transparent PVC layer
400: surface treatment layer 500: dimension reinforcing layer 600: printed layer

### [Best mode]

Now, the configurations and functions of preferred embodiments of the present invention will be described in detail with reference to the accompanying drawings.

FIG. 2 is a cross-sectional view illustrating the configuration of a flame retardant flooring material in accordance with one embodiment of the present invention, and FIG. 3 is a cross-sectional view illustrating the configuration of a flame retardant flooring material in accordance with another embodiment of the present invention.

With reference to FIG. 2, a flame retardant flooring material in accordance with one preferred embodiment of the present invention includes a plain weave layer 100, a PVB balance layer 200 stacked on the upper surface of the plain weave layer 100, a dimension reinforcing layer 500 stacked on the upper surface of the PVB balance layer 200 using an adhesive, a printed layer 600 stacked on the upper surface of the dimension reinforcing layer 500, a transparent PVC layer 300 stacked on the upper surface of the printed layer 600, and a surface treatment layer 400 stacked on the upper surface of the transparent PVC layer 300, and the balance layer forming the main portion of the flooring material is formed of PVB resin having flame retardancy so as to provide a flooring material having flame retardancy.

Hereinafter, the configuration of the present invention will be described in detail.

The plain weave layer 100 serves to increase adhesive force to a floor, on which the flooring material is constructed, and to balance overall curling between the upper and lower portions of the flooring material.

Although plain-woven fabrics applied to the plain weave layer 100 are not limited, general plain-woven fabrics are weak to heat and have a negative influence on shrinkage and, thus, a plain-woven fabric manufactured by setting through scouring at a high temperature is preferably used.

Such a plain weave layer 100 is formed to have a grating of a size of about 25 meshes, i.e., a size of 1*1 mm.

The plain weave layer 100 is non-essential and may be omitted.

The PVB balance layer 200 is stacked on the upper surface of the plain weave layer 100 and serves to balance the overall flooring material.

The PVB balance layer 200 is formed of a resin composition including Polyvinyl butyral (PVB) resin, a phosphate ester plasticizer and at least one other additives.

More specifically, the PVB balance layer includes 5 to 30 parts by weight of a phosphate ester plasticizer and 100 to 300 parts by weight of other additives with respect to 100 parts by weight of PVB resin.

The PVB resin of the resin composition is plasticized by the phosphate ester plasticizer and thus has flame retardancy.

Further, the PVB resin has higher stability to heat than PVC resin and is thus suitable for use as a flame retardant material.

Further, although the PVB resin is combusted, the PVB resin does not generate toxic gases and may thus provide better flame retardancy.

Such PVB resin means a resin including homopolymers and copolymers of Polyvinyl butyral.

The weight average molecular weight of the PVB resin may be about 10,000 to 2,500,000, preferably, about 10,000 to 250,000.

Further, the PVB resin has 10 to 50 % by weight of residual polyvinyl alcohol.

The phosphate ester plasticizer of the resin composition includes phosphate ester monomers, without being limited thereto.

For example, phosphate esters include tri-n-butyl phosphate, tri-isobutyl phosphate, triphenyl phosphate, tricresyl phosphate, tri-2,3-xylyl phosphate, trimesityl phosphate, methyldiphenyl phosphate, dimethyl phenyl phosphate, ethyl di-cresyl phosphate, tripentyl phosphate, trihexyl phosphate, pentyl dihexyl phosphate, octyl diphenyl phosphate, trioctyl phosphate, octyl di-p-cresyl phosphate, tri-cyclohexyl phosphate, cyclohexyl diphenyl phosphate, dicyclohexyl phenyl phosphate, trinonyl phosphate, hexyl phenyl cresyl phosphate, 2-methylpentyl phenyl cresyl phosphate, octylphenyl cresyl phosphate, 2-ethylhexyl phenyl cresyl phosphate, n-octyl phenyl cresyl phosphate, nonyl phenyl cresyl phosphate, n-decyl phenyl cresyl phosphate, lauryl phenyl cresyl phosphate, butoxyethyl phenyl cresyl phosphate, 2-methylpentoxyethyl phenyl cresyl phosphate, hexoxyethyl phenyl cresyl phosphate, octoxyethyl phenyl cresyl phosphate, 2-ethylhexyloxyethlyphenyl cresyl phosphate, nonyloxyethyl phenyl cresyl phosphate, decyloxyethyl phenyl cresyl phosphate, lauroxyethyl phenyl cresyl phosphate, hexyl dicresyl phosphate, 2-ethylbutyl diphenyl phosphate, 2-methylpentyl dicresyl phosphate, n-hexyl diphenyl phosphate, octyl dicresyl phosphate, 2-ethylhexyl dicresyl phosphate, iso-octyl dicresyl phosphate, n-octyl diphenyl phosphate, 2-ethylhexyl diphenyl phosphate, iso-octyl diphenyl phosphate, nonyl diphenyl phosphate, trimethylhexyl diphenyl phosphate, nonyl dicresyl phosphate, n-decyl diphenyl phosphate, decyl dicresyl phosphate, lauryl diphenyl phosphate, dodecyl dicresyl phosphate, 2-ethylhexylmethyl phenyl phosphate, 2-ethylhexyl iso-butyl-p-chlorophenyl phosphate, n-octyl n-butyl phenyl phosphate, 2-ethylhexyl isobutylphenyl phosphate, 2-ethylhexyl n-butyl phenyl phosphate, 2-ethylhexyl sec-butyl cresyl phosphate, 2-ethylhexyl n-butyl cresyl phosphate, di(2-ethylhexyl)phenyl phosphate, 2-ethylhexyl capryl phenyl phosphate, 2-ethylhexyl 2-butyloctyl cresyl phosphate, n-butyl sec-tetradecyl phenyl phosphate, n-hexadecyl isopropyl phenyl phosphate, dodecyldiphenyl phosphate, tri-2-ethylhexyl phosphate, cresyl diphenyl phosphate and combinations thereof.

Preferably, the phosphate ester includes 12 to 30 carbon atoms. For example, the phosphate ester may be trioctyl phosphate (particularly, tri-2-ethylhexyl phosphate), 2-ethylhexyl diphenyl phosphate, tricresyl phosphate, dodecyl diphenyl phosphate, tributoxyethyl phosphate or cresyl diphenyl phosphate.

Such a phosphate ester plasticizer plasticizes the PVB resin so that the PVB resin has much improved flame retardancy.

Other additives of the resin composition include general excipients, stabilizers, dyes and/or pigments and the like.

The dimension reinforcing layer 500 is stacked on the upper surface of the PVB balance layer 200 after an adhesive is applied to the upper surface of the PVB balance layer 200, and thus serves to reinforce dimensional stability of the flooring material.

The dimension reinforcing layer 500 is preferably formed of glass fiber impregnated with polyvinyl chloride (PVC) sol.

The reason why the dimension reinforcing layer 500 is formed of glass fiber impregnated with PVC sol is to facilitate bonding of glass fiber to the printed layer 600 or the PVB balance layer 200.

The polyvinyl chloride (PVC) sol may include 100 parts by weight of polyvinyl chloride having a degree of polymerization of 1200 to 1700, 50 to 100 parts by weight of dioctylphthalate as a plasticizer, 1 to 3 parts by weight of epoxidized soybean oil, 2 to 6 parts by weight of a barium-zinc stabilizer, 10 to 80 parts by weight of calcium carbonate, and 5 to 50 parts by weight of titanium dioxide as a white pigment.

The printed layer 600 is stacked on the upper surface of the dimension reinforcing layer 500 and thus serves to provide various printing patterns.

The printed layer 600 may include 100 parts by weight of polyvinyl chloride having a degree of polymerization of 1000 to 1700, 30 to 50 parts by weight of dioctylphthalate (DOP) as a plasticizer, 1 to 3 parts by weight of epoxidized soybean oil (E.S.O), 1 to 80 parts by weight of calcium carbonate, 0.5 to 30 parts by weight of titanium dioxide as a white pigment, 2 to 6 parts by weight of a barium-zinc stabilizer, and pigments.

Such a printed layer 600 provides a pattern on the upper surface thereof through gravure, screen or transfer printing, and transfer printing is preferably carried out to provide a pattern through transfer printing using printing paper so as to create various external appearances, without being limited thereto.

The transparent PVC layer 300 is stacked on the upper surface of the printed layer 600 and thus serves to protect the printed layer 600 and to block various harmful substances emitted from the layers formed therebelow.

The transparent PVC layer 300 may include 100 parts by weight of polyvinyl chloride having of a degree of polymerization of 1000 to 1700, 30 to 60 parts by weight of dioctylphthalate (DOP) as a plasticizer, 1 to 3 parts by weight of epoxidized soybean oil (E.S.O), and 2 to 6 parts by weight of a barium-zinc stabilizer.

The surface treatment layer 400 serves to improve scratch resistance and abrasion resistance and to prevent contaminants from being attached to the flooring material.

The surface treatment layer 400 may be formed of general photocurable urethane acrylate.

As exemplarily shown in FIG. 3, the printed layer 600 and the dimension reinforcing layer 500 may be omitted and other layers may be stacked to manufacture a flooring material.

Of course, the surface treatment layer 400, which is the uppermost layer, may be omitted.

However, in order to improve scratch resistance and abrasion resistance and to prevent contaminants from being attached to the flooring material, the surface treatment layer 400 is preferably formed.

Hereinafter, a process of manufacturing a flame retardant flooring material having the above configuration will be described.

A PVB balance layer 200 and a transparent PVC layer 300 of the flooring material of the present invention are manufactured through calendering.

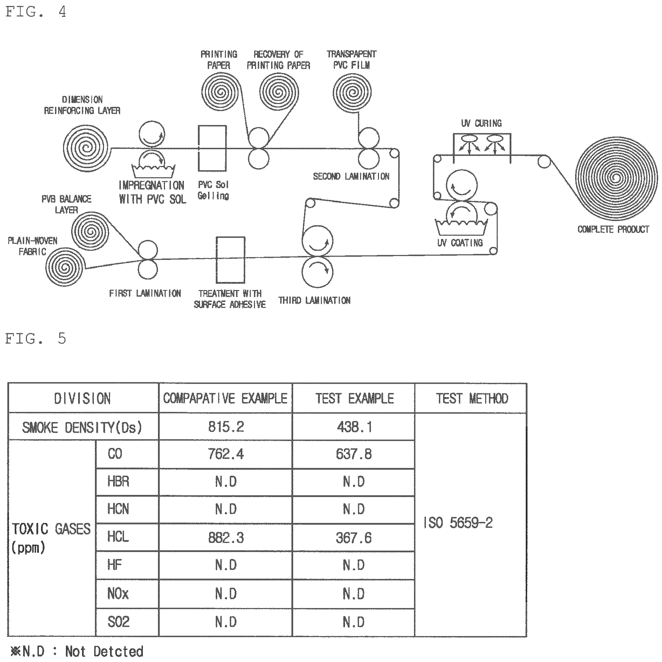

With reference to FIG. 4, a plain-woven fabric is bonded to the lower surface of the PVB balance layer 200, thus forming a plain weave layer 100.

Here, the plain weave layer 100 is preferably formed of a plain-woven fabric manufactured by setting through scouring at a high temperature.

Thereafter, an adhesive is applied to the upper surface of the PVB balance layer 200.

Further, glass fiber is impregnated with polyvinyl chloride (PVC) sol and is gelled, thus forming a dimension reinforcing layer 500.

Thereafter, a printed layer 600 is formed on the upper surface of the dimension reinforcing layer 500 through printing.

Here, the printed layer 600 is formed through transfer printing using printing paper, thus providing a pattern.

Thereafter, a transparent PVC film is bonded to the upper surface of the printed layer 600, thus forming a transparent PVC layer 300.

After the layers forming the upper and lower portions of the flooring material are independently bonded, the lower surface of the dimension reinforcing layer 500 is bonded to the upper surface of the PVB balance layer 200 to which the adhesive is applied.

After a plurality of layers is bonded into one unit, UV coating is executed on the upper surface of the transparent PVC layer 300 using a coating device and then UV curing is carried out, thus forming a surface treatment layer 400. Thereby, a final product is completed.

FIG. 5 is a table showing test data comparing emission amounts of toxic gases from a flame retardant flooring material in accordance with the present invention and a conventional PVC flooring material.

With reference to the table, it may be understood that, as results of a toxic gas emission amount test using a test method according to 'ISO 5659-2', in case of the flame retardant flooring material in accordance with the present invention, a smoke density (Ds) and emission amounts of toxic gases (CO, HCl) are greatly reduced.

A flame retardant flooring material and a method of manufacturing the same in accordance with the present invention are not limited to the above-described embodiments and those skilled in the art will appreciate that various modifications, additions and substitutions are possible, without departing from the scope and spirit of the invention as disclosed in the accompanying claims.

## Claims

1. A flame retardant flooring material comprising:
a plain weave layer;
a PVB balance layer stacked on the upper surface of the plain weave layer; and
a transparent PVC layer stacked on the PVB balance layer.

2. The flame retardant flooring material according to claim 1, further comprising a surface treatment layer formed on the upper surface of the transparent PVC layer.

3. A flame retardant flooring material comprising:
a plain weave layer;
a PVB balance layer stacked on the upper surface of the plain weave layer;
a dimension reinforcing layer stacked on the upper surface of the PVB balance layer using an adhesive;
a printed layer stacked on the upper surface of the dimension reinforcing layer; and
a transparent PVC layer stacked on the printed layer.

4. The flame retardant flooring material according to claim 3, further comprising a surface treatment layer formed on the upper surface of the transparent PVC layer.

5. The flame retardant flooring material according to any one of claims 1 to 4, wherein the plain weave layer is formed of a plain-woven fabric manufactured by setting through scouring at a high temperature.

6. The flame retardant flooring material according to any one of claims 1 to 4, wherein the PVB balance layer is formed of a resin composition including PVB resin, a phosphate ester plasticizer and at least one other additives.

7. The flame retardant flooring material according to claim 6, wherein the PVB balance layer includes 5 to 30 parts by weight of the phosphate ester plasticizer and 100 to 300 parts by weight of the additives with respect to 100 parts by weight of the PVB resin.

8. The flame retardant flooring material according to claim 7, wherein the PVB balance layer is manufactured by calendering.

9. The flame retardant flooring material according to claim 3, wherein the printed layer is formed through transfer printing using printing paper, executed on the upper surface of the dimension reinforcing layer.

10. The flame retardant flooring material according to claim 4, wherein the dimension reinforcing layer is formed of glass fiber impregnated with polyvinyl chloride (PVC) sol.

11. A method of manufacturing a flame retardant flooring material comprising:
a first step of forming a plain weave layer by bonding a plain-woven fabric to the lower surface of a PVB balance layer;
a second step of applying an adhesive to the upper surface of the PVB balance layer;
a third step of forming a dimension reinforcing layer by impregnating fiber with polyvinyl chloride (PVC) sol and then gelling the fiber;
a fourth step of forming a printed layer on the upper surface of the dimension reinforcing layer;
a fifth step of forming a transparent PVC layer by bonding a transparent PVC film to the upper surface of the printing surface;
a sixth step of bonding the lower surface of the dimension reinforcing layer to the upper surface of the PVB balance layer provided with the adhesive applied thereto; and
a seventh step of forming a surface treatment layer by executing UV coating on the upper surface of the transparent PVC layer and then executing UV curing.

12. The method according to claim 11, wherein, in the third step, the printed layer is formed through transfer printing using printing paper, executed on the upper surface of the dimension reinforcing layer.

13. The method according to claim 11, wherein the fiber forming the dimension reinforcing layer is glass fiber.
